# EUROPEAN PATENT APPLICATION

(11) **EP 1 865 310 A1**
(43) Date of publication of application: **12.12.2007**
(21) Application number: 06012004.5
(22) Date of filing: 10.06.2006
(51) Int. Cl.: G01N 27/22

(54) **Enantioselective capacitive sensor**

(71) Applicant: ETH Zürich, 8092 Zürich (CH)
(72) Inventor: Hierlemann, Andreas, 8049 Zürich (CH); Kurzawski, Petra, 8046 Zürich (CH); Bogdanski, Anja, 72108 Rottenburg (DE); Schurig, Volker, 72076 Tübingen (DE)

(57) **Abstract**

The present invention relates to an enantioselective capacitive sensor, its manufacture and use and to devices comprising such sensors.

## Description

The present invention relates to an enantioselective capacitive sensor, its manufacture and use and to devices comprising such sensors.

EP 1607739 discloses capacitive sensors with configurable electrodes, the sensor being covered with sensitive layers which interact with an analyte.

DE 4413121 discloses a process of separating enantiomers by liquid chromatography, using chiral immobile phases. Chiral phases useful in this process are polysiloxanes to which a cyclodextrin is chemically bound.

K Bodenhöfer et al (Anal. Chem. 1997, 69, 4017 ff) discloses a method of chiral discrimination of certain organic compounds using Thickness Shear Mode Resonators coated with a cyclodextrin derivative diluted in a polysiloxane matrix. These sensors show strong nonlinearities in the sensor response.

It is an aim of the present invention, to provide alternative or improved methods and devices for chiral on-line analysis.

It is a further aim of the present invention to provide a sensor that immediately and reliably determines (a) which enantiomer is present in the analyte (in case of an enantiopure analytes) or (b) the enantiomeric purity of an analyte or the enantiomeric composition of a mixture.

It is a further aim of the present invention to provide a sensor that can be manufactured at low cost and / or that is easy to use.

It is a further aim of the present invention to provide a process for manufacturing an enantioselective capacitive sensor.

It is a further aim of the present invention to provide a process for determining the enantiomeric purity or the type of an enantiomer in an analyte.

It was now found that capacitive sensors, wherein the dielectric of said sensor comprises an enantioselective compound in a polymer matrix, are useful in chiral on-line analysis.

It was also found that a process comprising the step of contacting a vaporized analyte with the above described sensor allows an immediate and reliable chiral on-line analysis.

Unless otherwise stated, the following definitions shall apply in this specification:

The term "Analyte" refers to a chiral compound for which the enantiomeric identity or purity needs to be determined. Such compounds have one or more chiral elements, preferably one element, such as a chrial carbon atom. Suitable analytes can be vaporized for the purpose of chiral on-line analysis. Thus, non-ionic chemical entities having a low molecular weight are suitable analytes. A preferred group of analytes are those obtained by combinatorial chemistry during drug research, such as lactates, lactames, esters, amides. A further preferred group of analytes are anaesthetics, such as enflurane, isoflurane, desflurane.

The term "chiral on-line analysis" refers to the immediate and reliable determination of (a) which enantiomer is present in a given analyte (in case of enantiopure analytes) or (b) the enantiomeric purity of an analyte, or the enantiomeric composition of a mixture.

The term "enantioselective compound" refers to any molecule that is capable to selectively and reversibly include or bind one enantiomer of the analyte. Whereby "selectively" refers to a preference (and not necessarily an exclusivity) of the enantioselective compound towards one enantiomer of the analyte. Enantioselective compounds such as cage compounds may be more or less selective towards different analytes. Depending on the need of the user, either very selective compounds or non-selective compounds are preferred.

Preferred enantioselective compounds belong to the class of cyclodextrines and substituted (modified) cyclodextrines such as unsubstituted alpha- beta- or gamma-cyclodextrin or substituted alpha- beta- or gamma-cyclodextrines, the substituents being selected from the group of C₁-C₈ alkyl, C₁-C₈trialkylsilyl, C₁-C₈ hydroxyalkyl. Particular examples of suitable cyclodextrines are hexakis-(2,3,6-tri-O-pentyl)-α-cyclodextrin , hexakis-(2,6-di-O-pentyl)-α-cyclodextrin, heptakis-(2,6-tri-O-pentyl)-β-cyclodextrin, heptakis-(2,6-di-O-pentyl-3-O-acetyl)-β-cyclodextrin, octakis-(2,6-di-O-pentyl-3-O-butyryl)-γ-cyclodextrin, octakis-(2,3-di-O-pentyl-6-O-methyl)-γ-cyclodextrin, heptakis-(2,3-di-O-acetyl-6-O-*t*-butyldimethyl-silyl)-β-cyclodextrin, heptakis-(2,3,6-tri-O-metyl)-β-cyclodextrin, heptakis-(2,6-di-O-metyl-3 -O-pentyl)-β-cyclodextrin, heptakis-(2,3-di-O-metyl-6-O-t-butyldimethyl-silyl)-β-cyclodextrin, with particular preference given to octakis-(2,6-di-O-pentyl-3-O-butyryl)-γ-cyclodextrin,

The term "polymer matrix" refers to any polymer that is suitable to disperse / dissolve an enantioselective compound and can be deposited onto the electrode assembly of the sensor surface. Such polymer matrices are known to the skilled person. Depending on the analyte, the enantioselective compound and the nature of the capacitive sensor, a selection of an appropriate polymer matrix is possible. In general, polymer matrices with a flexible backbone are preferred. Preferred polymer matrices include polysiloxanes and polyethers, particularly preferred are substituted polysiloxanes the substituents being selected from the group of C1-C4 Alkyl, e.g. methyl, C2-C4 Alkenyl, e.g. vinyl, and C6-C10 Aryl, e.g. phenyl.

A "capacitor" is a passive electronic component ("electrode assembly") that stores energy in the form of an electrostatic field. In its simplest form, a capacitor consists of two conducting plates separated by an insulating material called the dielectric. The capacitance is directly proportional to the surface areas of the plates, and is inversely proportional to the separation between the plates. Capacitance also depends on the dielectric constant of the substance separating the plates or electrodes, respectively (the "dielectric").

The term "capacitive sensor" refers to a device comprising a capacitor and a means for transducing an electrical signal caused by a change of the capacitance and a dielectric with an analyte-depending dielectric constant. The dielectric properties such as ε are strongly depending on the probing frequency, therefore any suitable frequency range may be used. A preferred group of capacitive sensors is described in EP 1607739, the content of which is incorporated by reference in its entirety.

In the context of this invention, it is understood that definitions and ranges, their preferences and particular preferences may be combined at will.

In a first aspect, the invention relates to a capacitive sensor wherein the dielectric comprises an enantioselective compound and optionally a polymer matrix.

In a preferred embodiment, the invention relates to a capacitive sensor wherein the dielectric comprises an enantioselective compound in a polymer matrix.

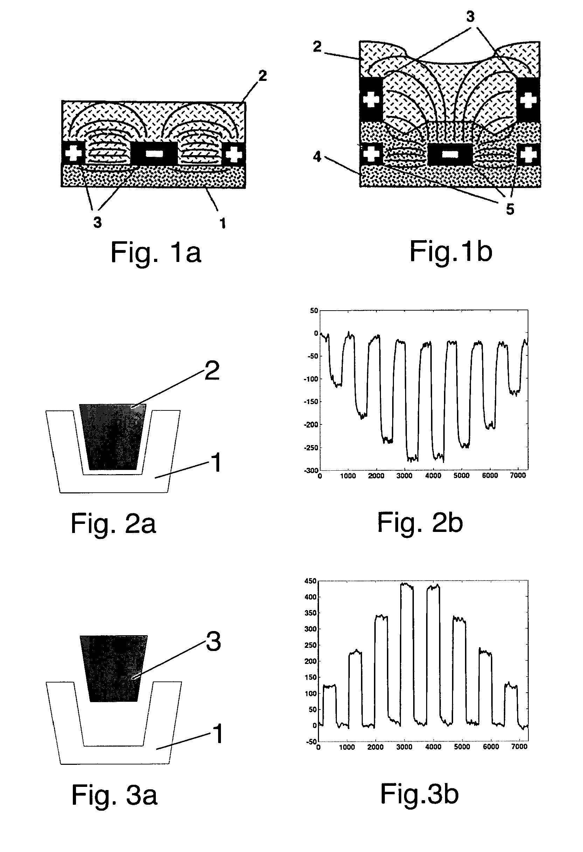

As capacitive sensor, any type of sensor may be used. Preferred is a capacitive sensor with a plurality of electrodes, characterized by an electrically configurable electrode arrangement with at least two electrically separated electrode groups, each group consisting of one or more electrodes, such that, depending on the electrical configuration, different electrical fields are generated. Such sensors are described in EP 1607739, the content of which, in particular fig. 3a and [0050] - [0055], is incorporated by reference.

Figs. 1a and 1b illustrate the design of a microcapacitor fabricated in CMOS-technology. Fig. 1a shows a scheme of planar electrodes 3 on the sensor substrate 1. The electrodes are covered with the sensitive layer 2, whereas the field lines extend essentially inside the sensitive layer. Fig. 1b depicts a sensor design with stacked electrodes. A first group or layer of electrodes 3 is arranged in the intermetal oxide 4. A second group or layer of electrodes 5 lies within the sensitive layer 2.

In a preferred embodiment, the enantioselective compound is selected from the group of cyclodextrines and modified cyclodextrines.

In a preferred embodiment, the polymer matrix is selected from the group of polysiloxanes and substituted polysiloxanes, preferably poly-dimethylsiloxane and poly-(methyl, phenyl)siloxane.

The thickness of the sensitive layer is measured relative to the extension of the electric field lines of the capacitor. For an interdigitated structure, the space above the device containing 95% of the field lines is within a distance of approximately half of the electrode periodicity, as described by P. Van Gerwen et al in "Nanoscaled interdigitated electrode arrays for biochemical sensors", Proc. of Transducers '97, 2, 907-910. For capacitors in general, i.e. not only interdigitated structures, the electrodes may be arranged arbitrarily. If the electrode arrangement is irregular, there is no periodicity in the structure. However, this will not cause the argumentation following further down to fail. The electrode spacing can be used equivalently to the electrode periodicity as measure for the extension of the electric field lines.

The ratio of cage compound to polymer matrix may vary in a broad range and depend on the analyte to be determined and the type of sensor used. Typically, the sensitive layer comprises 1 to 90 wt-% of the enantioselective compound, preferably 5 to 20 wt-% of cage compound.

In a second aspect, the invention relates to the manufacture of a capacitive sensor as described herein comprising the steps i) dissolving the enantioselective compound and the polymer matrix (if present) in a solvent ii) applying the obtained composite to the capacitive sensor, and optionally including an annealing step, iii) removing the solvent used.

The manufacturing of capacitive sensors is known in the art. The coating of such sensors with the sensitive layer may be performed by standard methods of coating electrical devices. For example, the following process is suitable: In a first step, the polymer matrix and enantioselective compound are dissolved in a solvent to obtain a homogeneous solution. Suitable solvents are inert solvents that can dissolve the components and are selected according to the polymer matrix used. In general, polar polymer matrices require polar solvents, e.g. alcohols while non-polar polymer matrices require less polar solvents, e.g. halogenated alkanes or halogenated aromatic compounds such as dichloromethane, chlorobenzene. In a second step, this solution is applied to the capacitive sensor, e.g. by spray technique. Optionally, an annealing step is included, i.e. the coated sensor is exposed to an saturated atmosphere of the solvent used. In a third step, the solvent is removed, e.g. by reduced pressure or by air-drying, giving the enantioselective capacitive sensor according to the invention.

In a further aspect, the invention relates to the use of a sensor as described herein for chiral on-line analysis comprising the steps of exposing the sensor to the analyte and analyzing the signal obtained.

Typically, one enantiomer of an analyte will result in a positive signal, while the other enantiomer will result in a negative signal. Without being bound by theory it is believed that, this is due to the fact that one enantiomer, the preferentially sorbed enantiomer, enters into closer contact with the recognition structure of the enantioselective compound than the other. The intimate contact will orient and order the involved molecules and reduce the dielectric constant of the complex that is formed between the recognition structure or receptor and analyte. The other enantiomer does not enter in such close contact with the recognition structure or receptor and, therefore, the dielectric properties of the complex receptor/analyte are similar to those of the separate components.

In Fig. 2a the preferential sorption of the enantiomer 2 into the recognition structure 1 is illustrated. The closer contact and reordering of the two molecules will affect a reduction of the dielectric constant. This will cause a negative sensor signal as shown in Fig. 2b. The capacitive sensor as described in Fig. 1b is coated with octakis-(2,6-di-O-pentyl-3-O-butyryl)-γ-cyclodextrin/PDMS (50% w/w) and exposed to different concentrations of (S)-methyl-2-chloropropionate (2-8 Pa). The sensor signal is read as a frequency shift (Y-axis, in Hz)as a function of time (x-axis, in seconds).

Fig. 3a depicts the non-preferential sorption of the analyte 3 into the recognition structure 1. Because of the loose contact the dielectric behavior of the receptor/analyte complex is similar to that of the separate compounds. Fig. 3b illustrates the output signal for the identical sensor as in Fig. 1b with a enantioselective coating of octakis-(2,6-di-O-pentyl-3-O-butyryl)-γ-cyclodextrin/PDMS (50% w/w). The analyte is the non-preferential (R)-methyl-2-chloropropionate, which is applied at different concentrations (2-8 Pa). Due to the non-preferential recognition the analyte/receptor complex causes a positive sensor signal.

Signal analysis, in particular the analysis of the signal in dependence of time, will provide information on the concentration and thus on the enantiomeric purity of the analyte or composition of a mixture.

The time exposing the analyte to the sensor may vary in a broad range. Without being bound to theory, it is believed that a volume absorption of the analyte to the sensitive layer is required. Thus, at least 0,1s, preferably 1s, of exposure time are required to obtain a reliable chiral on-line analysis. This time depends inter alia on the layer thickness.

The temperatures at which chiral on-line analysis is done may vary in a broad range. The temperature needs to be sufficient high to allow the analyte to vaporize. Further, the stability of sensitive layer determines an upper range of temperatures. Preferably, chiral on-line analysis is done at temperatures between about 0°C and 300°C, preferably between 20°C and 200°C.

In a further aspect, the invention relates to device comprising a sensor as described above.

The invention will now be described by way of example. These examples are meant to illustrate the invention, with no intend to a limitation.

### Example 1: Manufacture of sensor according to the invention

Sensor: The capacitive sensor is manufactured according to standard procedures, as described e.g. in A. Kummer et al (IEEE Sensors 2006, 6(1), 3 ff)

Coating: The material acting as enantioselective layer is deposited onto the sensing structures by spray- coating using an airbrush. The airbrush has been fixed at a distance from the chip. For spraying the octakis-(2,6-di-O-pentyl-3-O-butyryl)-γ-cyclodextrin/PDMS (50% w/w), heptakis-(2,6-tri-O-pentyl)-β-cyclodextrin/PDMS (50% w/w), or hexakis-(2,6-di-O-pentyl)-α-cyclodextrin (50% w/w) is dissolved in dichloromethane, at a concentration of 4 mg/ml. The solution is sprayed onto the cleaned devices using pure nitrogen as a carrier gas. The thickness of the enantioselective layer is thus that the volume of the electrical field between the electrodes of the capacitive microsensor is completely covered with the enantioselective material. After the layer deposition the enantioselective layer is cured in a saturated atmosphere of dichloromethane for several minutes to form smooth layers on the sensing elements. In air the solvent evaporates completely out of the cyclodextrin/PDMS layers.

### Example 2: use of a sensor according to the invention

For chiral on-line analysis, the sensor of ex. 1 is connected to the computer via a PCB board, on which the chip is mounted and a MIO or FPGA board. The read-out signal is written onto a text file for later analysis, but can also be displayed directly using appropriate software, e.g. LabView.

For gas tests, dual in-line packages on a PCB board containing the via wire-bonding electrically connected CMOS capacitors are mounted in the measurement chamber of a computer-controlled gas manifold. The gas measurement setup features a cross-over flow architecture by use of a fast crossover 4-way valve, the matched flow resistances of the two output gas lines of the 4-way valve, as well as a small tubing volume between the valve and the sensor measurement chamber. The cross-over flow architecture has two input gas lines, one supplying pure carrier gas and the other supplying carrier gas with defined doses of the analyte, and two output gas lines, one leading to the measurement chamber, the other leading directly to the exhaust. This architecture allows for a continuous flowing of both input flows and both output flows. This the build-up time of the analyte concentration does not influence the (dynamic) sensors responses. With the dosing line being routed to the exhaust (sensors exposed to pure carrier gas), the desired analyte concentration can be adjusted by means of flow controllers. After sufficient time for concentration stabilization, the cross-over valve switches the dosing line to the sensors (carrier gas to the exhaust), which then experience a sudden steep concentration gradient. Using the crossover architecture, it is possible to rapidly switch between pure carrier gas and carrier gas containing a defined concentration of a certain analyte. The flow rate is 200 ml/min

The analyte vapors were generated from temperature-controlled vaporizers using synthetic air as carrier gas, and then diluted as desired using computer- driven mass-flow controllers. The vapor-phase concentrations at the respective temperatures were calculated following the Antoine equation.

The sensors were mounted into a flow-through cell of a thermo-regulated chamber, and the measurements were performed at a temperature of 303 K. Both gas streams (pure carrier gas and carrier gas with analyte) are thermostabilized at the measurement chamber temperature before reaching the cross-over valve.

Typical experiments consisted of alternating exposures to pure synthetic air and analyte-loaded synthetic air. Exposure times of 10-15 minutes to analyte-loaded gas (to reach thermodynamic equilibrium) were followed by 10-15 minutes purging the chamber with pure synthetic air.

As test substances (analytes), the pure enantiomers of methyl lactate ((S)-methyl lactate, (R)-methyl lactate) and of methyl-2-chloropropionate ((S)-methyl-2-chloropropionate, (R)- methyl-2-chloropropionate ) as well as their racemic mixtures are used.

## Claims

1. A capacitive sensor wherein the dielectric comprises an enantioselective compound and optionally a polymer matrix.

2. A capacitive sensor according to claim 1 having a plurality of electrodes, **characterized by** an electrically configurable electrode arrangement with at least two electrically separated electrode groups, each group consisting of one or more electrodes, such that, depending on the electrical configuration, different electrical fields are generated.

3. A capacitive sensor according to claim 1 or 2 wherein the dielectric covers said capacitive sensor.

4. A capacitive sensor according to any of claims 1 to 3 wherein the enantioselective compound is selected from the group of cyclodextrines and substituted cyclodextrines.

5. A capacitive sensor according to any of claims 1 to 4 wherein the polymer matrix material is selected from the group of substituted polysiloxanes.

6. A capacitive sensor according to any of claims 1 to 5 wherein the thickness of the sensitive layer is adjusted to cover at least 95 % of the lines of the electric field of said capacitive sensor.

7. A process for manufacturing a capacitive sensor according to any of claims 1 - 6 comprising the steps of i) dissolving the enantioselective cage compound and optionally the polymer matrix in a solvent ii) applying the obtained composition to the capacitive sensor, and optionally including an annealing step, iii) removing the solvent used.

8. Use of a sensor according to any of claims 1 to 6 for chiral on-line analysis.

9. Use according to claim 7 for chiral on-line analysis of anesthetics.

10. Use according to claim 8 or 9 comprising the steps of exposing the analyte to the sensor and analyzing the signal obtained.

11. Electrical device, comprising a capacitive sensor according to any of claims 1 - 6.
